# EUROPÄISCHE PATENTSCHRIFT

(11) **EP 1 846 720 B1**
(45) Veröffentlichungstag und Bekanntmachung des Hinweises auf die Patenterteilung: **23.12.2020**
(21) Anmeldenummer: 06706576.3
(22) Anmeldetag: 02.02.2006
(51) Int. Cl.: F28F 27/02, F28D 7/16, F02M 26/26

(54) **ABGASWÄRMEÜBERTRAGER, INSBESONDERE FÜR KRAFTFAHRZEUGE**
EXHAUST GAS HEAT EXCHANGER, ESPECIALLY FOR MOTOR VEHICLES
ECHANGEUR DE CHALEUR DE GAZ D'ECHAPPEMENT, NOTAMMENT POUR AUTOMOBILES

(30) Priorität: 03.02.2005 DE 102005005189
(43) Veröffentlichungstag der Anmeldung: 24.10.2007
(73) Patentinhaber: MAHLE Behr GmbH & Co. KG, 70469 Stuttgart (DE)
(72) Erfinder: PALANCHON, Herve, M8V 1A7 Etobicoke, Ontario (CA); STIEGLER, Martin, 73110 Hattenhofen (DE); WERNER, Dieter, 70565 Stuttgart (DE)
(74) Vertreter: Grauel, Andreas
(86) Internationale Anmeldenummer: PCT/EP2006/000906
(87) Internationale Veröffentlichungsnummer: WO 2006/082049

(56) Entgegenhaltungen:
- EP-A- 1 111 227
- EP-A- 1 275 838
- EP-A- 1 363 012
- EP-A- 1 589 214
- US-A- 3 294 198
- US-A- 4 828 235
- US-A- 5 630 574
- US-A- 5 762 044
- US-A- 6 141 961

## Beschreibung

Die Erfindung betrifft einen Abgaswärmeübertrager nach dem Oberbegriff von Anspruch 1.

Abgaswärmeübertrager, insbesondere Abgaskühler sowie Abgasklappen sind bei Abgasrückführsystemen, so genannten AGR-Systemen für Kraftfahrzeuge bekannt. Die Abgasrückführung dient der Reduzierung von Schadstoffen und des Kraftstoffverbrauches bei Brennkraftmaschinen von Kraftfahrzeugen. Abgaswärmeübertrager können auch für Heizzwecke eingesetzt werden, insbesondere bei verbrauchsoptimierten Motoren, wie Dieselmotoren - ein derartiger Wärmeübertrager ist in der DE 199 62 863 A1 der Anmelderin beschrieben. Der bekannte Abgaswärmeübertrager weist einen integrierten Bypass auf, wobei die Abgasströmung mittels eines Stellelementes entweder durch den Wärmeübertragerteil oder durch den Bypasskanal gelenkt wird. Damit kann die Heizleistung dem Bedarf angepasst werden. Das Stellelement wird durch einen Stellmotor betätigt. Ein als Abgaskühler ausgebildeter Abgaswärmeübertrager wurde durch die DE 198 41 927 A1 bekannt. Ein Bündel von U-förmig gebogenen, vom Kühlmittel umspülten Abgasrohren bildet den Abgaswärmeübertrager, dem eine Ventileinrichtung zur Steuerung des Abgasstromes zugeordnet ist. Eine auf einer Klappenwelle angeordnete Schwenkklappe steuert den Abgasstrom in der Weise, dass der Abgaswärmeübertrager entweder durchströmt oder mittels eines Bypasskanals umgangen wird. Somit gibt der Abgasstrom nur bei Bedarf seine Wärme an das Kühlmittel ab. Die bekannten schwenkbaren Abgasklappen werden über einen außerhalb der Ventileinrichtung angeordneten Stellmotor, vorzugsweise eine so genannte Unterdruckdose, betätigt. Dabei wirkt der dem Ansaugtrakt der Brennkraftmaschine entnommene Unterdruck gegen eine Membran, an welcher eine Steuerstange befestigt ist, und führt somit gegen die Wirkung einer Rückstellfeder eine Stellbewegung aus, die auf die Klappenwelle übertragen wird.

Durch die EP 1 030 050 A1 wurde ein Abgasrückführsystem mit einem durch ein flüssiges Kühlmittel gekühlten Abgaskühler bekannt, dem eine den Abgaskühler umgehende Bypassleitung zugeordnet ist. Stromaufwärts vom Abgaskühler ist eine Ventileinrichtung angeordnet, welche als Weiche für den Abgasstrom wirkt und diesen entweder durch den Abgaskühler oder den Bypasskanal lenkt. Die Ventileinrichtung weist ein Ventilschließglied auf, welches entweder als Tellerventil oder als Schwenkklappe ausgebildet ist, wobei der Antrieb des Ventilschließgliedes jeweils durch ein pneumatisches Stellorgan erfolgt, welches in seinem Hubzylinder eine Rückstellfeder aufweist. Bei Belüftung des Stellorgans (Wegfall des Unterdruckes) bewirkt die Rückstellfeder im Stellorgan eine Rückstellung des Ventils bzw. der Klappe in eine bevorzugte Ausgangsstellung.

Durch die DE 102 03 003 A1, von der die Erfindung ausgeht, wurde ein Abgaswärmeübertrager, insbesondere ein Abgaskühler bekannt, bei welchem - ähnlich zu der eingangs erwähnten DE 199 62 863 A1 - ein Bypasskanal in das Gehäuse des Abgaskühlers integriert ist. Im Abgasstrom - stromaufwärts oder stromabwärts des Abgaskühlers - ist eine Ventileinrichtung mit einem Ventilschließglied vorgesehen, welches als Weiche für den Abgasstrom wirkt und von einem außerhalb des Gehäuses angeordneten Stellmotor, insbesondere einer so genannten Unterdruckdose angetrieben wird. Die bekannte Ventileinrichtung ist in verschiedenen Ausführungen beschrieben: als so genannte Halbklappe, bei welcher die Klappenwelle außermittig zur Klappe angeordnet ist, oder als Schwenkklappe mit mittiger Klappenwellenanordnung. Darüber hinaus ist auch eine so genannte Winkelklappe mit einer mittig angeordneten Schwenkachse bzw. Klappenwelle vorgesehen. Die Klappenwelle ist jeweils aus dem Gehäuse herausgeführt und über einen geeigneten Übertragungsmechanismus mit der Unterdruckdose verbunden, wobei die translatorische Bewegung der Unterdruckdose in eine Rotations- bzw. Schwenkbewegung der Klappenwelle umgewandelt wird. Die Rückstellung der Abgasklappe erfolgt über die Unterdruckdose, die ihrerseits eine Rückstellfeder aufweist.

Nachteilig bei den bekannten Klappenantrieben ist, dass der Stellmotor, die Teile des Übertragungsmechanismus, z. B. die Steuerstange sowie die Abgasklappe, genau zueinander positioniert werden müssen, da sich anderenfalls keine genaue Positionierung für die Klappenstellung ergibt. Daraus können sich unerwünschte Geräusche und ein vorzeitiger Verschleiß ergeben. Darüber hinaus ist bei nicht montiertem Stellmotor nachteilig, dass die Abgasklappe keine definierte Stellung einnimmt, da sie mangels Rückstellfeder nicht fixiert ist. Dies ist beim Transport hinderlich.

Ein Abgaswärmeübertrager mit den Merkmalen des Oberbegriffs von Anspruch 1 ist aus Dokument EP 1 363 012 A bekannt.

Es ist Aufgabe der vorliegenden Erfindung, für einen Abgaswärmeübertrager der eingangs genannten Art einen verbesserten Stellantrieb dazustellen, welcher zu einer erhöhten Dauerfestigkeit für das Ventilschließglied, insbesondere die Klappe, die Klappenwelle und den Übertragungsmechanismus führt.

Diese Aufgabe wird durch die Merkmale des Patentanspruches 1 gelöst.

Erfindungsgemäß ist ein Abgaswärmeübertrager, wie in Anspruch 1 beschrieben, vorgesehen. So
ist vorgesehen, dass die Welle des Ventilschließgliedes, insbesondere die Klappenwelle der Abgasklappe, durch eine Drehfeder belastet ist. Unter dem Begriff Drehfeder ist ein Federelement zu verstehen, welches geeignet ist, ein Drehmoment in die Ventil- bzw. Klappenwelle einzuleiten, so dass die Klappe in eine Endstellung bewegt und dort gehalten wird. Ein derartiges Drehfederelement kann somit verschiedene konstruktive Ausführungsformen aufweisen, z. B. als insbesondere spiralförmige Torsionsfeder, ausgebildet sein. Vorteilhaft ist, dass das Ventilschließglied bzw. die Abgasklappe in eine definierte bevorzugte Stellung gebracht wird, und zwar auch für den Fall, dass der Stellmotor nicht montiert ist oder im Betrieb ausfällt. In beiden Fällen wird somit ein Klappern oder Flattern und ein vorzeitiger Verschleiß vermieden. Durch die erfindungsgemäße Drehfeder werden auch maximal mögliche Haltekräfte für die Abgasklappe erreicht, was infolge der hochfrequenten Anregungen der Klappe durch den pulsierenden Abgasstrom besonders wichtig ist. Durch diese stabile Fail-Safe-Position wird darüber hinaus der Vorteil erreicht, dass der Schwingungsreibverschleiß der Klappenwelle in der Wellenführung erheblich reduziert wird. Vorteilhaft bei der Fail-Safe-Stellung ist ferner, dass der Übertragungsmechanismus zwischen Ventilwelle und Stellmotor bzw. Unterdruckdose entlastet wird, woraus sich eine Reduktion der Materialermüdung für diese Teile ergibt. Schließlich ist von Vorteil, dass die Rückstellfeder im Stellmotor, insbesondere in einer Unterdruckdose entfallen kann, da die Vorspannung der Klappe bereits durch die erfindungsgemäße Drehfeder aufgebracht wird. Darüber hinaus verbessern sich dadurch die Montagetoleranzen erheblich. Obwohl die Drehfeder in erster Linie ein Drehmoment auf die Ventilwelle ausübt, d. h. eine Kraft in Umfangsrichtung, ist je nach Ausbildung der Drehfeder auch eine Axialkraft, d. h. in Richtung der Klappenachse möglich. Damit wird der Vorteil erreicht, dass eine eindeutige Fixierung der Welle in axialer Richtung und eine Verminderung der axialen Toleranzen möglich sind.

Nach einer erfindungsgemäßen Ausgestaltung ist die Drehfeder aus einem Federdraht schraubenförmig gewunden, d. h. als so genannte Schenkelfeder mit zwei abstehenden Federschenkeln ausgebildet. Derartige Schenkelfedern, die auf einem Dorn geführt werden, sind an sich als Maschinenelement bekannt. Vorteilhaft ist, dass sich eine günstige Federsteifigkeit, insbesondere ein großer Federweg, ergibt, der u. a. durch die Zahl der Windungen beeinflussbar ist. Darüber hinaus kann die Drehfeder koaxial zur Ventil- oder Klappenwelle angeordnet werden, wobei vorteilhafterweise auf der Ventilwelle eine Führungshülse angeordnet ist. Vorteilhaft bei der Schenkelfeder ist ferner, dass deren Schenkel auf relativ einfache Weise einerseits am Gehäuse und andererseits an der Ventilwelle abgestützt werden können. An der Ventilwelle ist dafür vorteilhafterweise ein Schwenkhebel befestigt, an welchem ein Federschenkel der Schenkelfeder angreift und somit das Drehmoment in die Klappenwelle einleitet.

In weiterer erfindungsgemäßer Ausgestaltung ist der Stellmotor als pneumatisch betriebener Stellmotor, d. h. als so genannte Unterdruckdose, ausgebildet, welche als Arbeitsmedium den Unterdruck der Ansauganlage der Brennkraftmaschine verwendet. Aufgrund der erfindungsgemäßen Drehfeder und deren Anordnung auf der Ventilwelle ergibt sich der Vorteil, dass die Rückstellfeder in der Unterdruckdose entfallen kann. Die Unterdruckdose arbeitet somit gegen die Wirkung der erfindungsgemäßen Drehfeder und verstellt das Ventilverschlussglied bzw. die Klappe in eine andere Endstellung. Aus Fail-Safe-Gründen wird dies in der Regel die Stellung sein, in welcher der Abgasstrom durch den Bypasskanal strömt, also während der Warmlaufphase des Motors. Nach Erreichen der Warmlaufphase wird die Unterdruckzufuhr abgeschaltet, wodurch die Klappe aufgrund des Momentes der Drehfeder in ihre Betriebsstellung überführt wird, d. h. in die Position, in welcher der Abgasstrom durch den Abgaskühler gelenkt und somit vom Kühlmittel gekühlt wird. Der betreffende Stellmotor, insbesondere eine Unterdruckdose kann somit einfacher und damit kostengünstiger hergestellt werden.

Ein Ausführungsbeispiel der Erfindung ist in der Zeichnung dargestellt und wird im Folgenden näher beschrieben. Es zeigen
- Fig. 1: einen Abgaskühler mit erfindungsgemäßem Klappenstellantrieb als Ansicht,
- Fig. 2: den Abgaskühler gemäß Fig. 1 als Draufsicht, und
- Fig. 3: einen Schnitt entlang der Linie III-III in Fig. 2.

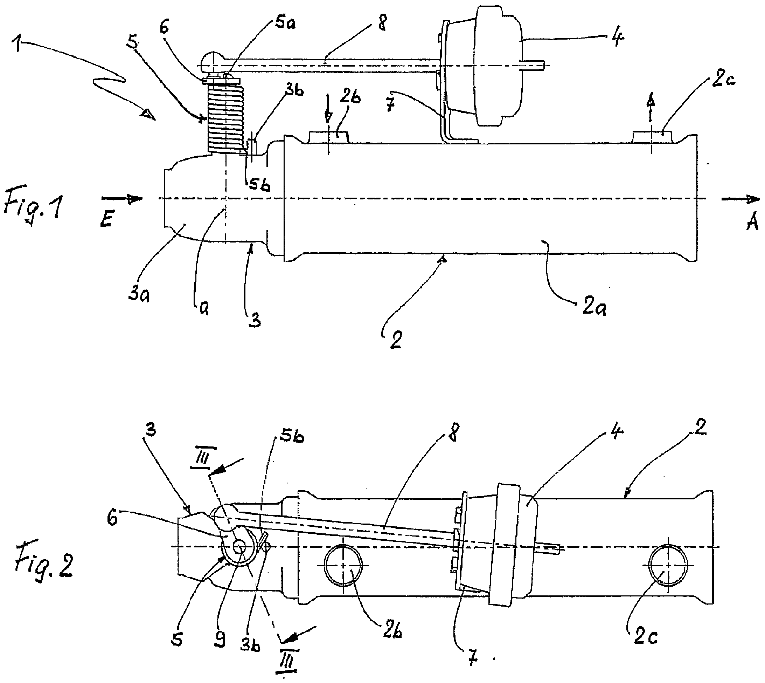

Fig. 1 zeigt eine Abgaskühleinrichtung 1, die in einem nicht dargestellten Abgasrückführsystem eines Kraftfahrzeuges verwendbar ist. Die Abgaskühleinrichtung 1 weist einen Abgaskühler 2 und eine Ventileinrichtung 3 auf, welche von einem als Unterdruckdose 4 ausgebildeten Stellmotor antreibbar ist. Der Abgaskühler 2 weist ein Gehäuse 2a mit einem Kühlmitteleintrittsstutzen 2b und einem Kühlmittelaustrittsstutzen 2c auf, über welche der Abgaskühler 2 mit einem nicht dargestellten Kühlmittelkreislauf einer Brennkraftmaschine des Kraftfahrzeuges verbunden ist. Innerhalb des Gehäuses 2a ist ein nicht dargestelltes Rohrbündel von Abgasrohren angeordnet, die innen von Abgas durchströmt und außen von Kühlmittel umspült werden. Kühlmitteleintritt 2b und Kühlmittelaustritt 2c können vertauscht werden, d. h. die Kühlmittelströmung kann bedarfsweise auch in umgekehrter Richtung, d. h. im Gleichstrom oder Gegenstrom, zum Abgas erfolgen. Der Abgaskühler 2 weist zusätzlich zu dem nicht dargestellten Bündel von Abgasrohren einen ebenfalls nicht dargestellten integrierten Bypasskanal auf, entsprechend der eingangs erwähnten DE 102 03 003 A1, deren Inhalt hiermit vollumfänglich in den Offenbarungsgehalt der vorliegenden Anmeldung einbezogen wird. Das Abgas, welches durch eine nicht dargestellte AGR-Leitung zurückgeführt wird, tritt gemäß Pfeil E in eine Öffnung der Ventileinrichtung 3 ein und verlässt den Abgaskühler 2 entsprechend Pfeil A. Die Ventileinrichtung 3 weist ein Gehäuse 3a auf, welches mit dem Gehäuse 2a des Abgaskühlers 2 verbunden, vorzugsweise verschweißt ist und in sich eine hier nicht dargestellte Abgasklappe zur Steuerung des Abgasstromes aufnimmt. Die Abgas- bzw. Ventilklappe weist eine Schwenkachse a auf, welche als gestrichelte Linie dargestellt ist und gleichzeitig die Achse einer schraubenförmig gewundenen Drehfeder 5 bildet, welche außerhalb des Ventilgehäuses 3a angeordnet ist. Die Drehfeder 5, auch Schenkelfeder genannt, weist zwei Federschenkel 5a, 5b auf, welche einerseits mit einem um die Achse a drehbaren Schwenkhebel 6 verbunden und andererseits an einem Zapfen 3b des Gehäuses 3a abgestützt sind. Am Gehäuse 2a ist eine Unterdruckdose 4 mittels eines Halters 7 befestigt und über eine Steuerstange 8 mit dem Schwenkhebel 6 gelenkig verbunden.

Fig. 2 zeigt die Abgaskühleinrichtung 1 gemäß Fig. 1 in einer Ansicht von oben, wobei für gleiche Teile die gleichen Bezugszahlen eingesetzt sind. Der um die Achse a schwenkbare Schwenkhebel 6 ist mit einer aus dem Ventilgehäuse 3a herausgeführten Klappenwelle 9 fest verbunden. Somit wird eine Translationsbewegung der Steuerstange 8 der Unterdruckdose 4 in eine Rotations- oder Schwenkbewegung der Klappenwelle 9 umgewandelt. Man sieht in dieser Draufsicht auch deutlich, wie sich der untere Federschenkel 5b der Schenkelfeder 5 am Zapfen 3b des Gehäuses 3a abstützt. Der andere in der Draufsicht nicht sichtbare Federschenkel 5a greift mit einem Hebelarm in Bezug auf die Schwenkachse a am Schwenkhebel 6 an und wirkt der Stellbewegung der Steuerstange 8 entgegen.

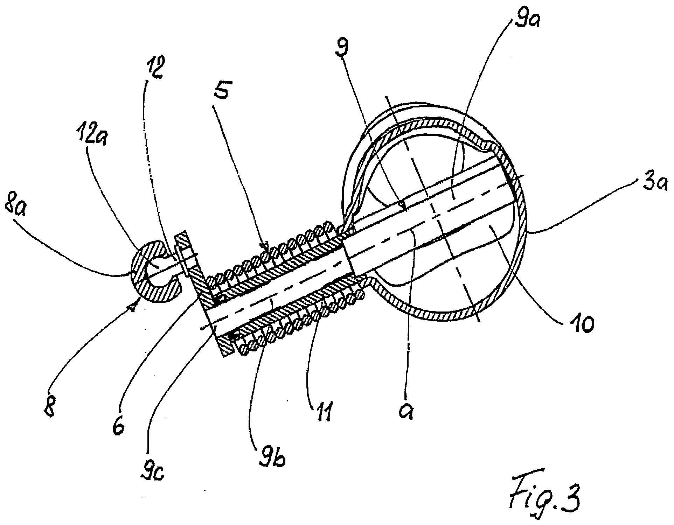

Fig. 3 zeigt einen Schnitt in der Ebene III-III, wie in Fig. 2 eingezeichnet. Die Klappenwelle 9 weist einen im Wesentlichen innerhalb des Ventilgehäuses 3a angeordneten Wellenabschnitt 9a und einen außerhalb des Ventilgehäuses 3a angeordneten Wellenabschnitt 9b auf, an dessen Ende 9c der Schwenkhebel 6, vorzugsweise durch Schweißen, drehfest befestigt ist. Auf dem inneren Wellenabschnitt 9a ist eine Abgasklappe 10 (verkürzt dargestellt) drehfest angeordnet. Die Abgasklappe 10 wirkt als Weiche und lenkt den in das Gehäuse 3a eintretenden Abgasstrom entweder durch das Rohrbündel des Abgaskühlers oder durch den Bypass, welche in dieser Darstellung nicht sichtbar sind, in ihrer Ausbildung jedoch der zuvor erwähnten und in den Offenbarungsgehalt einbezogenen Druckschrift entsprechen. Die Drehfeder 5 ist - wie bereits erwähnt - als schraubenförmig aus einem Federdraht gewundene Biegefeder ausgebildet, welche - hier nicht sichtbar - am Schwenkhebel 6 und am Gehäuse 3a abgestützt ist. Damit wird von der vorgespannten Drehfeder 5 ein Drehmoment auf die Klappenwelle 9 eingeleitet und die Abgasklappe 10 in eine Endstellung gedrückt, welche vorzugsweise einem geschlossenen Bypasskanal entspricht. Auf dem Abschnitt 9b der Klappenwelle 9 ist eine Führungshülse 11 angeordnet, welche eine Führung der Drehfeder 5 bewirkt. Am Schwenkhebel 6 ist mit Abstand zur Schwenkachse a ein Gelenkzapfen 12 mit einem Kugelkopf 12a befestigt, welcher von einer Kugelkappe 8a der Steuerstange 8 umfasst ist. Der Gelenkzapfen 12 und die Steuerstange 8 bilden somit über den Kugelkopf 12a und die Kugelkappe 8a ein Kugelgelenk.

Die Wirkungsweise des Klappenantriebes ist folgende: Wenn der Unterdruckstellantrieb 4 (Unterdruckdose) deaktiviert ist, d. h. kein Unterdruck anliegt, stellt die Drehfeder 5 aufgrund ihrer Vorspannung die Klappenwelle 9 und damit die Abgasklappe 10 in eine Grund- oder Fail-Safe-Stellung. Diese entspricht vorzugsweise einer Stellung, in welcher der Bypasskanal abgedeckt ist, d. h. der Abgasstrom durch den Abgaskühler fließt und somit gekühlt wird. Die Klappe 10 kann gemäß den Ausführungsformen des zuvor erwähnten Standes der Technik ausgebildet sein. Wird die Unterdruckdose 4 aktiviert, d. h. mit Unterdruck beaufschlagt, so wird die Steuerstange 8 gegen die Wirkrichtung der Drehfeder 5 bewegt, damit eine Rotationsbewegung auf die Klappenwelle 9 eingeleitet und die Abgasklappe 10 verstellt, und zwar in eine Stellung, welche einer Öffnung des Bypasskanals entspricht. Dies geschieht beispielsweise während der Warmlaufphase des Motors, wenn eine Kühlung der Abgase nicht erforderlich ist. Die Drehfeder 5 ist hinsichtlich ihres Federweges und ihrer Federkraft so ausgelegt, dass sich bei deaktiviertem Stellantrieb 4 eine feste Anlage der Abgasklappe 10 am Gehäuse 3a ergibt, d.h. dass ein "Flattern" der Klappe infolge der pulsierenden Abgasströmung vermieden wird. Eine beim Stand der Technik für Stellantriebe, insbesondere Unterdruckdosen übliche Rückstellfeder kann für die Unterdruckdose 4 entfallen.

Die erfindungsgemäße Drehfeder zur Vorspannung der Klappenwelle einer Abgasklappe ist nicht auf die Verwendung in einem Abgaswärmeübertrager mit einem Bypasskanal - sei dieser integriert oder als separater Kanal ausgebildet - beschränkt, vielmehr kann die Erfindung auch vorteilhaft auf in einem Abgaskanal angeordnete Abgasklappen angewandt werden, welche über eine Klappenwelle und einen Stellmotor angetrieben werden. Beispielsweise könnte dies bei einer Ventileinrichtung gemäß dem eingangs genannten Stand der Technik nach der DE 198 41 927 A1 der Fall sein.

## Patentansprüche

1. Abgaswärmeübertrager (2), insbesondere für Kraftfahrzeuge, mit einem Hauptströmungsweg und einem Nebenströmungsweg auch Bypass genannt, für das Abgas, mit einer einen Abgasstrom steuernden Ventileinrichtung (3), die von einem Stellmotor (4) mittels einer Übertragungseinrichtung (8, 6) betätigbar ist, wobei die Ventileinrichtung (3) ein auf einer Ventilwelle (9) befestigtes Ventilschließglied (10) aufweist, wobei die Ventilwelle (9) durch eine Drehfeder (5) belastbar ist, welche einerseits an der Ventilwelle (9) und andererseits an der Ventileinrichtung (3, 3a) abgestützt ist und die Drehfeder als schraubenförmig gewundene Biegefeder oder Schenkelfeder 5) mit zwei Federschenkeln (5a, 5b) oder als Spiralfeder ausgebildet ist und die Ventilwelle (9) einen aus der Ventileinrichtung (3, 3a) nach außen geführten Wellenabschnitt (9b) aufweist, und dass die Drehfeder (5) koaxial auf dem Wellenabschnitt (9b) angeordnet ist, **dadurch gekennzeichnet, dass** innerhalb der Drehfeder (5) auf dem Wellenabschnitt (9b) eine Hülse (11) angeordnet ist, wobei die Drehfeder (5) als Rückstellfeder für den Stellmotor ausgebildet ist und der Stellmotor (4) am Gehäuse (2a) des Abgaswärmeübertragers (2) befestigt ist und wobei der Stellmotor als Unterdruckstellmotor (4) ohne Rückstellfeder in dem Unterdruckstellmotor ausgebildet ist.

2. Abgaswärmeübertrager nach Anspruch 1, **dadurch gekennzeichnet, dass** am Ende (9c) des Wellenabschnittes (9b) ein Schwenkhebel (6) befestigt ist, der mit einer Steuerstange (8) gelenkig verbunden ist.

3. Abgaswärmeübertrager nach Anspruch 1 oder 2, **dadurch gekennzeichnet, dass** das Ventilschließglied als Klappe (10) und die Ventilwelle als Klappenwelle (9) ausgebildet sind.

4. Abgaswärmeübertrager nach Anspruch 3, **dadurch gekennzeichnet, dass** die Klappenwelle (9) mittig oder außermittig zur Klappe (10) angeordnet ist.

## Claims

1. An exhaust gas heat exchanger (2), in particular for motor vehicles, with a main flow path and an alternate flow path, also called bypass, for the exhaust gas, with a valve mechanism (3) controlling an exhaust gas flow, operable by an actuator (4) via a transmission mechanism (8, 6), wherein the valve mechanism (3) comprises a valve closing member (10) mounted on a valve shaft (9), wherein the valve shaft (9) can be loaded by a torsion spring (5), which is braced on the one hand against the valve shaft (9) and against the valve mechanism (3, 3a) on the other, and the torsion spring is constructed as a helically wound flexion spring or leg spring (5) with two spring legs (5a, 5b) or as a spiral spring, and the valve shaft (9) has a shaft section (9b) led out of the valve mechanism (3, 3a), and that the torsion spring (5) is arranged coaxially on the shaft section (9b), **characterised in that** a bushing (11) is arranged inside the torsion spring (5) on the shaft section (9b), wherein the torsion spring (5) is constructed as a reset spring for the actuator and the actuator (4) is fastened to the housing (2a) of the exhaust gas heat exchanger (2) and wherein the actuator is constructed as a negative pressure actuator (4) without a reset spring in the negative pressure actuator.

2. The exhaust gas heat exchanger according to claim 1, **characterised in that** a pivoted lever (6) that is articulated to a control rod (8) is fastened to the end (9c) of the shaft section (9b).

3. The exhaust gas heat exchanger according to claim 1 or 2, **characterised in that** the valve closing member is constructed as a flap (10) and the valve shaft is constructed as a flap shaft (9).

4. The exhaust gas heat exchanger according to claim 3, **characterised in that** the flap shaft (9) is arranged centrically or off centre with respect to the flap (10) .

## Revendications

1. Echangeur de chaleur de gaz d'échappement (2), en particulier pour des véhicules automobiles, ledit échangeur de chaleur de gaz d'échappement comprenant un trajet d'écoulement principal et un trajet d'écoulement secondaire, appelé également dérivation, pour les gaz d'échappement, comprenant un dispositif formant vanne (3) commandant un flux de gaz d'échappement, lequel dispositif formant vanne peut être actionné par un servomoteur (4) au moyen d'un dispositif de transmission (8, 6), où le dispositif formant vanne (3) présente un élément de fermeture de vanne (10) fixé sur un arbre de vanne (9), où l'arbre de vanne (9) peut être sollicité par un ressort de torsion (5) qui est en appui d'une part sur l'arbre de vanne (9) et d'autre part sur le dispositif formant vanne (3, 3a), et le ressort de torsion est conçu comme un ressort de flexion de forme hélicoïdale ou comme un ressort à branches (5) ayant deux branches de ressort (5a, 5b), ou bien conçu comme un ressort à spirale, et l'arbre de vanne (9) présente un segment d'arbre (9b) guidé vers l'extérieur à partir du dispositif formant vanne (3, 3a), et où le ressort de torsion (5) est disposé de façon coaxiale sur le segment d'arbre (9b), **caractérisé en ce qu'une** douille (11) est disposée sur le segment d'arbre (9b), à l'intérieur du ressort de torsion (5), où le ressort de torsion (5) est conçu comme un ressort de rappel pour le servomoteur, et le servomoteur (4) est fixé sur le carter (2a) de l'échangeur de chaleur de gaz d'échappement (2), et où le servomoteur est conçu comme un servomoteur à vide (4) sans ressort de rappel dans le servomoteur à vide.

2. Echangeur de chaleur de gaz d'échappement selon la revendication 1, **caractérisé en ce qu'un** levier pivotant (6) est fixé au niveau de l'extrémité (9c) du segment d'arbre (9b), lequel levier pivotant est relié de manière articulée à une tige de commande (8).

3. Echangeur de chaleur de gaz d'échappement selon la revendication 1 ou 2, **caractérisé en ce que** l'élément de fermeture de la vanne est conçu comme un clapet (10), l'arbre de la vanne étant conçu comme un arbre de clapet (9).

4. Echangeur de chaleur de gaz d'échappement selon la revendication 3, **caractérisé en ce que** l'arbre de clapet (9) est disposé de manière centrée ou excentrée par rapport au clapet (10).
